Europäisches Patentamt

European Patent Office

Office européen des brevets

(11) Publication number: **0 415 338 A1**

# EUROPEAN PATENT APPLICATION

(21) Application number: 90116460.8

(51) Int. Cl.⁵: **B67B 3/26**, G01M 3/34

(22) Date of filing: 28.08.90

(30) Priority: 30.08.89 IT 360389

(43) Date of publication of application:
06.03.91 Bulletin 91/10

(84) Designated Contracting States:
BE CH DE ES FR LI

(71) Applicant: SACMI Cooperativa Meccanici
Imola Soc. Coop. a Resp. Lim.
Via Provinciale Selice 17/A
I-40026 Imola (Bologna)(IT)

(72) Inventor: Alieri, Rodiero
Via Liverani 7
I-40026 Imola (Bologna)(IT)

(74) Representative: Modiano, Guido et al
MODIANO, JOSIF, PISANTY & STAUB
Modiano & Associati Via Meravigli, 16
I-20123 Milano(IT)

(54) Device for performing quality checks on crown caps and the like.

(57) The device for performing quality checks on crown caps and the like comprises a carousel (1) with peripherally distributed means for supporting a related cap (2) which are suitable for being actuated in a vertical direction between a lowered position and a raised position, and probe means (26) arranged respectively above the supporting means; the probe means (26) have an internal probe (30), which is suitable for abutting against the internal surface of the cap (2) and has an axial cavity intended to be closed tight by the cap and to be connected to suction means, and a peripheral probe (34), which is slidably mounted on the internal probe (30) and defines, in a downward position, a crown intended to elastically abut against the edge of the gasket of the caps.

Fig.1

# DEVICE FOR PERFORMING QUALITY CHECKS ON CROWN CAPS AND THE LIKE

The present invention relates to a device for performing quality checks on crown caps and the like.

As is known, crown caps are oonstituted by a shallow metallic cup inside which a gasket made of plastic material is applied and provides the seal on the lip of the bottle. It is evident that an imperfection in the gasket which prevents a perfect seal causes the alteration of the bottle contents.

Further disadvantages occur when the caps have a metallic cup the shape and dimensions whereof are not within the allowed tolerance limits. Defects in the closure of the bottles and jammings during bottling can in fact occur in this case.

The aim of the present invention is to solve the above described problem by providing a device which allows to automatically check the tightness of the gasket and the correct forming of the cup in crown caps and the like.

Within the scope of this aim, a further object of the present invention is to provide a device for performing quality checks on crown caps which is simple in concept, safely reliable in operation and versatile in use.

This aim and this object are both achieved, according to the invention, by the present device for performing quality checks on crown caps and the like, which is characterized in that it comprises a carousel with peripherally distributed means for supporting a related cap which are suitable for being actuated in a vertical direction between a lowered position and a raised position, and probe means which are arranged respectively above said supporting means and have an internal probe, suitable for abutting against the inner surface of the cap and is provided with an axial cavity intended to be closed tight by said cap and to be connected to suction means, and a peripheral probe which is slidably mounted on said internal probe and defines, in a downward position, a crown intended to elastically abut against the edge of the gasket of the caps.

The details of the invention will become apparent from the detailed description of a preferred embodiment of the device for performing quality checks on crown caps, illustrated only by way of non-limitative example in the accompanying drawings, wherein:

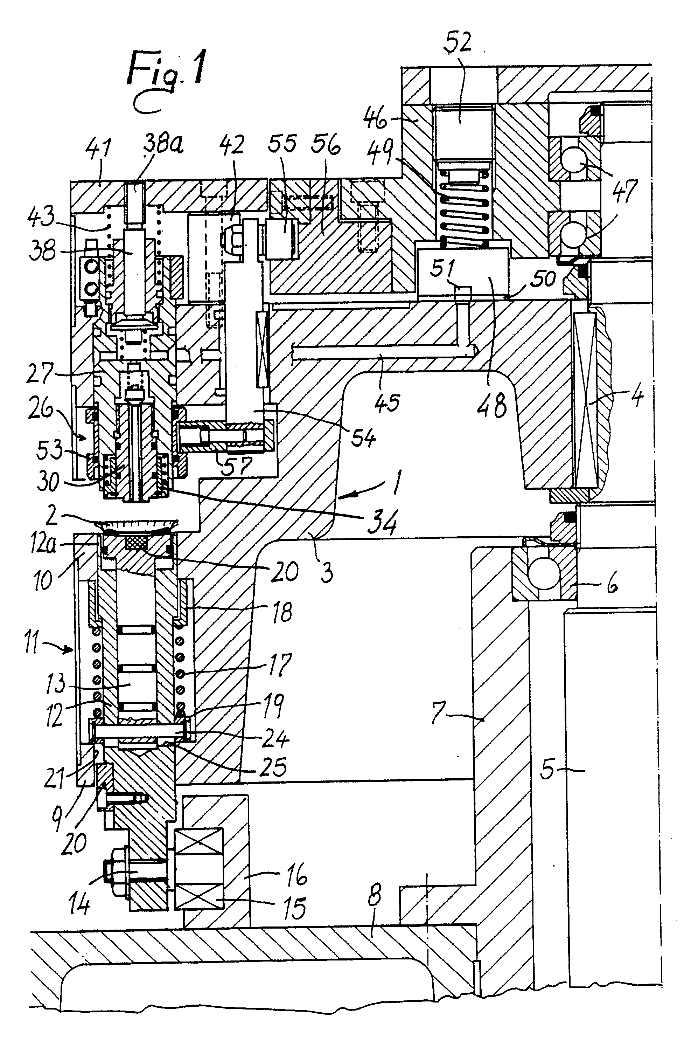

figure 1 is a partial axial sectional view of the device according to the invention;

figure 2 is a sectional detail view of said probe means.

With particular reference to said figures, the device according to the invention has a carousel, generally indicated by the reference numeral 1, which is suitable for peripherally conveying a plurality of crown caps 2.

The carousel 1 is constituted by a drum 3 which is coupled, by means of a keying bolt 4, to the top of a vertical shaft 5. Said shaft 5 is rotatably mounted, by means of ball bearings 6, within a sleeve 7 which rises from a base 8 of the device; the shaft 5 is rotated by conventional motor elements which are not shown in the drawings.

The drum 3 defines, downward and outward, a pair of superimposed flanges 9, 10 in which regularly distributed through seats are defined; respective means for supporting the caps 2, generally indicated by the reference numeral 11, are inserted in said seats so as to be vertically slidable. Said supporting means 11 comprise an outer cylinder 12, which passes through said pair of flanges 9 and 10, and an inner support 13 which is slidably and sealingly supported in an axial cavity of said cylinder 12.

The cylinder 12 defines, in an upward position, a ring 12a which duplicates the outer profile of the cup 2a of the crown cap, so as to allow to check the correct forming of said cup. Below the lower flange 9, the cylinder 12 instead has a roller 15 which is freely mounted with an axis 14 which is radial with respect to the shaft 5 of the carousel 1. Said roller 15 engages an annular cam 16 which is mounted on the base 8 of the device; said cam 16 is suitable for actuating the axial sliding of the cylinder 15. A helical spring 17, arranged between the flanges 9 and 10, ensures the contact of the roller 15 on the cam 16; the spring 17 abuts, at its opposite end, against a cup 18 and a ring 19 which are mounted on the cylinder 12. A tooth 20 which is fixed externally to the cylinder 12 engages a vertical groove 21 of the flange 9 so as to prevent the rotation of said cylinder 12.

The support 13 has a cylindrical shape and defines, at its top, an enlarged head 13a which is sealingly slidable in the internal seat 22 of the ring 12a of the cylinder 12. The head 13a has a slightly concave upper surface for the resting of the cap 2; a magnet 23 suitable for retaining the cap 2 during the movement of the carousel 1 is provided at said surface.

The support 13 is diametrically traversed, in a downward position, by a pin 24 which passes through vertical slots 25 defined on the cylinder 12 and is fixed to the ring 19 at its opposite ends.

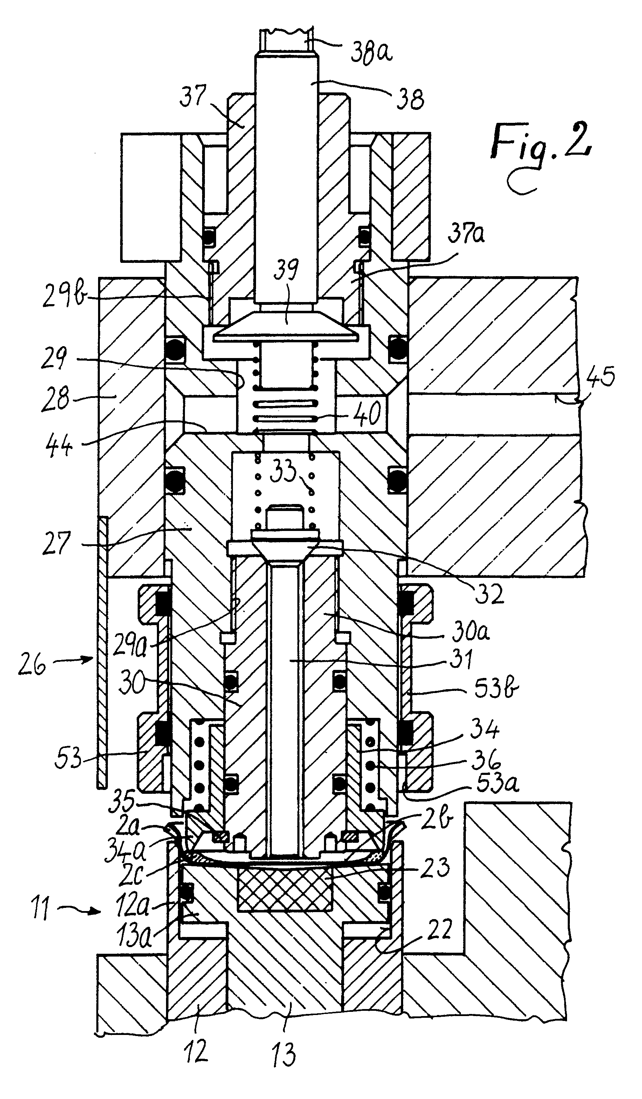

Above the supporting means 11, the drum 3 has corresponding probe means for the inner surface of the caps 2, generally indicated by the reference numeral 26 and illustrated in detail in figure 2. The probe means 26 are respectively constituted bY a substantially cylindrical body 27 which is vertically inserted in a corresponding through seat which is defined coaxially to the seat of the related support in a plate 28 which is defined upward by the drum 3.

The body 27 of the probe means 26 has an axial through cavity 29. Said cavity 29 is provided, in a downward position, with a threaded portion 29a and defines the seat in which an internal cylindrical probe 30 is sealingly mounted; said internal probe 30 defines, in an upward position, a threaded tang 30a for screwing in an adjustable position to the body 27. The internal probe 30 is intended to abut against the bottom 2b of the gasket of the caps 2.

The internal probe 30 is axially perforated and is engaged by a valve element which is constituted by a stem 31 which is longitudinally faceted and defines, at its top, a frustum-shaped plug 32. A helical spring 33 acts on the plug 32 and operates in compression in the direction of the closure of the valve element.

An annular peripheral probe 34 is slidably mounted on the internal probe 30 and defines, in a downward position, a crown 34a intended to abut against the edge 2c of the gasket of the caps 2. The peripheral probe 34 is retained downward by a ring 35 which is mounted on the internal probe 30 and is actuated downward by a helical spring 36 which abuts against an internal shoulder of the body 27.

The cavity 29 has, in an upward position, a further threaded portion 29b and defines the seat in which a sensor sleeve 37 is sealingly mounted; said sleeve 37 has a threaded portion 37a for screwing on the body 27.

Said sleeve 37 is engaged in turn by a valve element which is constituted by a stem 38 which is longitudinally faceted and defines, at its lower end, a frustum-shaped plug 39. A helical spring 40 acts on the plug 39 and operates in compression in the direction of the closure of the valve element.

The stem 38 has, at its top, a threaded tang 38a which is screwed in a corresponding hole of a disk 41 which is mounted above the drum 3 by means of spacers 42. The sleeve 37 is pushed downward by a helical spring 43 which acts in compression against the disk 41.

The cavity 29 of the body 27 is connected to a hole 44 which is defined transversely to said body 27 in a position which is intermediate between the closure seats of the plugs 32 and 39. Said hole 44 is in turn connected to a respective duct 45 which is defined radially to the drum 3 and leads onto the upper surface of said drum 3. The port of the duct 45 is closed, on the upper surface of the drum 3, by a lid 46 which is rigidly associated with the fixed frame of the device and is centered on the shaft 5 by means of ball bearings 47.

The lid 46 defines the seat for a ring 48 which is actuated in the direction of the drum 3 by a helical spring 49 and defines a seal by means of a gasket 50. A slot 51 is defined in the ring 48 at the circumference at which the ports of the ducts 45 are distributed; said slot 51 is intended to be connected, by means of a threaded coupling 52 mounted on the lid 46, to pneumatic suction means.

Calibration means 53 are slidably mounted in a downward position on the body 27 and are intended to detect whether the caps have a larger than normal external diameter. Said calibration means 53 are constituted by a ring which has, along its lower edge, a groove 53a which is intended to snugly accommodate the dentellated edge of the cap 2.

The calibration ring 53 is actuated in a vertical direction between a raised position and a lowered position by means of a rod 54 which supports, at its top, a roller 55 which is suitable for following an annular cam 56; said cam 56 is fixed peripherally to the lid 46. The rod 54 is slidably guided through the plate 28 of the drum 3 and has a transverse pin 57 which engages an outer groove 53b of the calibration ring.

The operation of the described device is as follows. The caps 2 are sent to the carousel 1 by means of appropriate distribution means and are arranged, with their concavity directed upward, on related supporting means 11 while they are in lowered position.

The ring 12a of the cylinder 12 duplicates the outer profile of the cup 2a of the crown cap, so as to allow to check that the forming of said cup has occurred correctly.

The cam 16 then lifts the cylinders 12 of the supporting means 11 until the related caps 2 engage the probe means 26. As illustrated in detail in figure 2, the lower face of the internal probe 30 abuts against the bottom 2b of the gasket of the caps 2, whereas the annular peripheral probe 34 abuts against the crown 34a at the raised edge 2c of said gasket.

It should be noted that the internal probe 30 assumes a fixed position with respect to the cap 2; said position is adjustable by axially moving said probe 30 with respect to the body 27, so as to adapt to profiles with different shapes. Since it is contrasted by the spring 36, the peripheral probe 34 instead elastically engages the cap 2, so that it can automatically adapt to the height of the profile of the edges 2c of the gasket within limits which are preset by the stroke of said probe 34. In practice it is thus possible to preset a maximum value and a minimum value of the height of the edge 2c of the gasket which define the tolerance limits of the gasket of the caps 2.

When the cap 2 is centered on the related probe means 26, the descent of the calibration ring 53, which is slidable on the body 27, is actuated by means of the cam 56. The calibration ring 53 centers on the cap 2 by means of the groove 53a which is suitable for snugly receiving the dentellated edge of said cap 2. If the cap 2 has a larger-than-normal diameter, this coupling is prevented, so that the cap is separated from the probe means and left on the support 13.

The engagement of the cap 2 on the internal probe 30 causes the lifting of the stem 31 and the consequent opening of the plug 32, in contrast with the spring 33. Therefore, when the cavity 29 is connected to the suction means, by means of the duct 45, the interspace defined between the lower face of the probe and the gasket of the cap is put under negative pressure.

The cam 16 then actuates the descent of the supporting means 11. If the gasket of the cap 2 provides a correct seal on the probe means 26, said cap 2 remains coupled thereto due to the negative pressure.

If vice versa the gasket has some imperfections, such as to prevent tightness, the cap separates from the probe and falls so as to rest on the support 13. The defective caps are subsequently removed by means of appropriate extraction means and are conveyed to appropriate collection means.

If the gasket of the cap is thicker than normal, the body 27 of the probe means 26 is furthermore raised in contrast with the spring 43. This movement causes the opening of the plug 39, the stem 38 whereof is fixed to the disk 41. Thus, the cavity 29 of the body 27 is connected to the outside environment through the sleeve 37. Therefore the cap 2, which is no longer retained by the negative pressure, remains rested on the support 13, from which it is subsequently extracted.

The means for extracting the defective caps conveniently have a guide suitable for removing the caps left on the supporting means 11. A sort of hook is furthermore provided and is suitable for acting progressively on the edge of the caps which have remained coupled to the probe means 26 due to a smaller-than-normal internal diameter.

The described device allows, in summary, to check the integrity and the thickness of the gasket of the cap, as well as the diameter and any deformations of the related metallic cup.

In the practical embodiment of the invention, the materials employed, as well as the shape and dimensions, may be any according to the requirements.

Where technical features mentioned in any claim are followed by reference signs, those reference signs have been included for the sole purpose of increasing the intelligibility of the claims and accordingly such reference signs do not have any limiting effect on the scope of each element identified by way of example by such reference signs.

## Claims

1. Device for performing quality checks on crown caps and the like, characterized in that it comprises a carousel (1) with peripherally distributed supporting means for a related cap (2), said means being suitable for being actuated in a vertical direction between a lowered position and a raised position, and probe means (26) arranged respectively above said supporting means, said probe means (26) having an internal probe (30), which is suitable for abutting against the internal surface of the cap (2) and has an axial cavity intended to be closed tight by said cap and to be connected to suction means, and a peripheral probe (34) which is slidably mounted on said internal probe (30) and defines, in a downward position, a crown intended to elastically abut against the edge of the gasket of the caps.

2. Device according to claim 1, characterized in that said supporting means comprise an external cylinder (12) which is suitable for being actuated vertically on said carousel (1) and defines, in an upward position, a ring (12a) intended to duplicate the outer profile of the cap (2), and an internal support (13) of a related cap which is slidably supported in an axial cavity of said outer cylinder and is actuated by spring means which act in contrast with the abutment thrust on said probe means.

3. Device according to claim 2, characterized in that said internal support (13) defines, at its top, an enlarged head which is slidable inside said upper ring of the outer cylinder and has a magnet (23) suitable for retaining the cap during the movement of said carousel.

4. Device according to claim 1, characterized in that said probe means have, in an upward position, a sensor sleeve (37) which is axially perforated and is engaged by a valve element which is constituted by a longitudinally faceted stem (38) which defines, at its lower end, a frustum-shaped plug (39) which is actuated so as to close by spring means and is screwed at the upper end in a disk (41) which is mounted above said carousel, said sleeve being pushed downward by spring means which act in compression against said disk.

5. Device according to claim 1, characterized in that said internal probe is axially perforated and is engaged by a valve element which is constituted by a longitudinally faceted stem (31) which defines, at its top, a frustum-shaped plug (32) actuated so as to close by spring means.

6. Device according to claim 1, characterized in that said peripheral probe is retained in a downward position by a ring (35) which is mounted on said internal probe and is actuated downward by spring means which abut against an internal shoulder of a body (27) of said probe means.

7. Device according to claim 1, characterized in that calibration means (53) are slidably mounted in a downward position on said probe means and are constituted by a ring, which has, along its lower edge, a groove (53a) intended to snugly receive the dentellated edge of the cap, and are actuated in a vertical direction between a raised position and a lowered position by means of a rod (54) which has, at its top, a roller (55) suitable for following a fixed annular cam (56).

8. Device for performing quality checks on crown caps and the like, according to what can be deduced from the description and from the drawings.

Fig.1

Fig.2

European
Patent Office

**EUROPEAN SEARCH
REPORT**

Application Number

**EP 90 11 6460**

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| A | DE-C-3 411 780 (BÄR)<br>* Figures 3,5,6; claims 1-8 *<br>— — — | 1 | B 67 B 3/26<br>G 01 M 3/34 |
| A | DE-A-2 903 468 (ZAPATA INDUSTRIES)<br>— — — | | |
| A | FR-A-2 337 335 (COURNUT)<br>— — — — — | | |

| | | | TECHNICAL FIELDS SEARCHED (Int. Cl.5) |
|---|---|---|---|
| | | | B 67 B<br>G 01 M |

The present search report has been drawn up for all claims

| Place of search | Date of completion of search | Examiner |
|---|---|---|
| The Hague | 09 November 90 | DEUTSCH J.P.M. |

CATEGORY OF CITED DOCUMENTS

X : particularly relevant if taken alone
Y : particularly relevant if combined with another document of the same catagory
A : technological background
O : non-written disclosure
P : intermediate document
T : theory or principle underlying the invention

E : earlier patent document, but published on, or after the filing date
D : document cited in the application
L : document cited for other reasons

&: member of the same patent family, corresponding document